(19) Europäisches Patentamt
European Patent Office
Office européen des brevets

(11) EP 2 871 039 A1

(12) **EUROPEAN PATENT APPLICATION**
published in accordance with Art. 153(4) EPC

(43) Date of publication:
**13.05.2015 Bulletin 2015/20**

(21) Application number: **13813375.6**

(22) Date of filing: **04.07.2013**

(51) Int Cl.:
***B29C 65/02*** *(2006.01)* ***B32B 15/08*** *(2006.01)*
***C08J 5/12*** *(2006.01)*

(86) International application number:
**PCT/JP2013/068407**

(87) International publication number:
**WO 2014/007342 (09.01.2014 Gazette 2014/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.07.2012 JP 2012152354**

(71) Applicant: **Teijin Limited**
**Osaka-shi, Osaka 541-0054 (JP)**

(72) Inventors:
- **HIRATA Masumi**
  **Matsuyama-shi**
  **Ehime 791-8044 (JP)**
- **SANO Hiroki**
  **Matsuyama-shi**
  **Ehime 791-8044 (JP)**
- **KATO Takumi**
  **Matsuyama-shi**
  **Ehime 791-8044 (JP)**

(74) Representative: **Carpmaels & Ransford LLP**
**One Southampton Row**
**London WC1B 5HA (GB)**

(54) **METHOD FOR PRODUCING FIBER-REINFORCED COMPOSITE MATERIAL-METAL MEMBER BONDED BODY, AND FIBER-REINFORCED COMPOSITE MATERIAL USED IN SAME**

(57) A method of efficiently manufacturing a joined body in which a composite material including a thermoplastic resin reinforced with fiber and a metal member are joined to each other is provided. In a state of bringing a protrusion including a thermoplastic resin on a surface of the fiber-reinforced composite material into contact with a surface of the metal member, by melting the thermoplastic resin of the protrusion on the surface of the fiber-reinforced composite material, the fiber-reinforced composite material and the metal member are firmly joined to eath other.



Printed by Jouve, 75001 PARIS (FR)

## Description

Technical Field

The present invention relates to a method of manufacturing a joined body including a composite material which includes a thermoplastic resin reinforced with fibers, and a metal member, which are joined to each other, and a fiber-reinforced composite material used for the method.

Background Art

A fiber-reinforced composite material (hereinafter, referred to as a "thermoplastic composite material") which includes a thermoplastic resin, as a matrix, reinforced with reinforcing fibers such as carbon fibers, glass fibers, aramid fibers has been given an important position as an excellent material in various fields due to its high specific strength, and specific rigidity, and applications of the thermoplastic composite material joined to a metal member have recently been increased.

In order to join a thermoplastic composite material to a metal member, the thermoplastic resin itself used as a matrix in a composite material is required to be firmly fused (adhered) on a metal surface. As to a method of joining a metal and a resin by melting the resin, Patent Document 1 discloses that an aluminium and a resin can be joined to each other due to an anchor effect by injection molding of the resin to an aluminium material having a fine porous surface. Also, Patent Documents 2 to 4 disclose a method of improving a joining property between a resin and a metal, in which a metal surface is treated with a triazine thiol derivative or the like to form an organic coating layer.

The thermoplastic composite material is easily transformed by addition of heat, and thus has an advantage in that it may be injection- or press- molded in a very short time as compared to a thermosetting composite material employing a thermosetting resin as a matrix. Accordingly, when the thermoplastic composite material is capable of being simply joined to a metal surface by thermal compression within a mold simultaneously with molding or immediately after molding, it is possible to very efficiently manufacture a joined body of a thermoplastic composite material and a metal member (hereinafter, referred to as a "thermoplastic composite material-metal member joined body").

However, the method disclosed in Patent Document 1 is substantially limited to injection molding, and further its application to metals other than aluminum is difficult. Also, in a thermoplastic composite material, a reinforecing fiber bundle is "impregnated" with a thermoplastic resin, but the resin is not necessarily homogeneuously present on the surface of the material, and "deficient" portions of the resin may be present in the material. Thus, enen if a thermoplastic composite material is joined to a metal by the method of joining the thermoplastic resin to the metal, which is disclosed in Patent Documents 2 and 3, there is some concern that a sufficient joining strength may not be developed or a joining strength may be widely varied. In particular, when reinforcing fibers are carbon fibers, the carbon fibers may cause so-called electrolytic corrosion in a metal, and thus, in the resin deficient portions, may corrode the metal by directly coming into contact with the metal.

Further, in a thermoplastic composite material, since reinforcing fibers are included in the composite material, it is inevitable that fine irregularities are present on the surface of the composite material. Thus, it is difficult to firmly join the thermoplastic composite material to the metal surface by an exsiting known method.

In order to solve these problems, there has recently been suggested a method disclosed in Patent Document 5, in which when a thermoplastic composite material is joined to a metal member, a layer containing a triazine thiol derivative is formed on the metal surface, and a thermoplastic resin layer such as a thermoplastic resin film is provided between the triazine thiol derivative-containing layer and the thermoplastic composite material, and the thermoplastic resin layer is heated and molten to firmly and stably join the thermoplastic composite material to the metal member.

This method is effective in a case of joining a flat thermoplastic composite material to a flat metal member. However, for example, when a thermoplastic composite material is joined to a metal member surface having undulations or level difference, it is not easy to provide a thermoplastic resin layer to precisely follow up the undulations or level difference of the metal member surface, and thus, firm and effective joint may be difficult. Further, since an operation for providing the thermoplastic resin layer between the thermoplastic composite material and the metal member is required, there is a problem in productivity.

Technical Document of Related Art

Patent Documents

Patent Document 1: Japanese Patent Laid-Open Publication No. 2003-103563

Patent Document 2: Japanese Examined Patent Application Publication H5-51671
Patent Document 3: WO No. 2009/157445 pamphlet
Patent Document 4: Japanese Patent Laid-Open Publication No. 2011-235570
Patent Document 5: WO No. 2012/074083 pamphlet

## Summary of Invention

### Problems to be Solved

An object of the present invention is to solve the foregoing problems in an exsisting method and to provide a method of manufacturing a joined body in which a thermoplastic composite material and a metal member are firmly joined to each other, i.e., a joined body of a thermoplastic composite material and a metal member, with good productivity.

### Means for Solving the Problems

The present inventors have researched improvement of a joining property between a thermoplastic composite material and a metal member, and as a result, the inventors have found that the thermoplastic composite material and the metal member may be stably and firmly joined to each other by: forming a protrusion including a thermoplastic resin on the surface of the thermoplastic composite material, bringing (preferably pressure-welding) the protrusion into contact with the surface of the metal member to be joined thereto, preferably with the surface of the metal member having a coating layer of an organic compound having a polar functional group; and in that sate, melting the thermoplastic resin of the protrusion through heating to weld the thermoplastic resin to the surface of the metal member. Based on this finding, the inventors have completed the present invention.

According to the present invention, a joined body of a thermoplastic composite material and a metal member is manufactured by the following methods (1) to (10). Also, the joined body may be manufactured by using the following fiber-reinforced composite material (11).

(1) A method of manufacturing a joined body of a fiber-reinforced composite material and a metal member, the fiber-reinforced composite material including reinforcing fibers and a thermoplastic resin as a matrix,
the method including, in a state of bringing a protrusion including a thermoplastic resin on a surface of the fiber-reinforced composite material into contact with a surface of the metal member, melting the thermoplastic resin of the protrusion on the surface of the fiber-reinforced composite material to join the fiber-reinforced composite material to the metal member.
(2) The method of manufacturing the joined body described in (1), wherein the protrusion on the surface of the fiber-reinforced composite material is brought into contact with the surface of the metal member on which a coating layer of an organic compound having a polar functional group is formed.
(3) The method of manufacturing the joined body described in (2), wherein the coating layer is formed by treating the surface of the metal member with a solution including the organic compound having the polar functional group.
(4) The method of manufacturing the joined body described in any one of (1) to (3), wherein a height of the protrusion on the surface of the fiber-reinforced composite material ranges from 1% to 55% with respect to a thickness of the fiber-reinforced composite material.
(5) The method of manufacturing the joined body described in any one of (1) to (4), wherein a height of the protrusion on the surface of the fiber-reinforced composite material ranges from 0.1 mm to 5 mm.
(6) The method of manufacturing the joined body described in any one of (1) to (5), wherein a content of the thermoplastic resin in protrusion on the surface of the fiber-reinforced composite material ranges from 50 wt% to 100 wt%.
(7) The method of manufacturing the joined body described in any one of (1) to (6), wherein a ratio of a total area of a bottom portion of the protrusion to a surface area of a portion to be joined to the metal member ranges from 1% to 80%, on the surface of the fiber-reinforced composite material.
(8) The method of manufacturing the joined body described in any one of (1) to (7), wherein the thermoplastic resin included in the protrusion on the surface of the fiber-reinforced composite material is the same kind of resin as the matrix of the fiber-reinforced composite material.
(9) The method of manufacturing the joined body described in any one of (1) to (8), wherein the fiber-reinforced composite material is a composite material obtained by impregnating a random mat including the reinforcing fibers with the thermoplastic resin as the matrix, and wherein in the fiber-reinforced composite material, an average fiber length of the reinforcing fibers ranges from 3 mm to 100 mm and an abundance of the matrix ranges from 30 parts to 200 parts by weight based on 100 parts by weight of the reinforcing fibers.
(10) The method of manufacturing the joined body described in (9), wherein in the random mat, a ratio of reinforcing

fiber bundles (A) constituted by the reinforcing fibers of a critical number of single fiber or more, defined by the following Equation (a), to a total amount of the reinforcing fibers in the random mat ranges from 20 Vol% to 99 Vol%, and an average number (N) of fibers in the reinforcing fiber bundles (A) satisfies the following Equation (b).

$$\text{Critical number of single fiber} = 600/D \qquad (a)$$

$$0.6\times10^4/D^2<N<1\times10^5/D^2 \qquad (b)$$

(wherein D represents an average fiber diameter (μm) of single reinforcing fibers.)
(11) A fiber-reinforced composite material used for manufacturing a joined body of a fiber-reinforced composite material and a metal member, which comprises reinforcing fibers and a thermoplastic resin as a matrix, wherein the fiber-reinforced composite material has a joining portion to be joined to another member and a protrusion including a thermoplastic resin on a surface of the joining portion.

Effect of Invention

According to the present invention, a thermoplastic composite material and a metal member may be firmly and stably joined to each other by a simple method without a thermoplastic resin layer, such as a thermoplastic resin film, interposed between both of the thermoplastic composite material and the metal member. Thus, a joined body of a fiber-reinforced composite material and a metal member with a good joining strength may be obtained with a good productivity. Also, a thermoplastic resin of a protrusion formed on the surface of the thermoplastic composite material is molten and welded on the surface of the metal member, and thus reinforcing fibers hardly exist in a joining portion between the thermoplastic composite material and the metal member. Accordingly, even if the reinforcing fibers are carbon fibers, electrolytic corrosion caused by the carbon fibers may be suppressed or inhibited. Even if the thermoplastic composite material is joined to a metal member surface having undulations or level difference, firm and effective joining may be achieved.

Exemplary Embodiments of Invention

According to the present invention, in a method of manufacturing a joined body by integrally joining a thermoplastic composite material including a thermoplastic resin as a matrix to a metal member, a protrusion including a thermoplastic resin is formed on the surface of the thermoplastic composite material, and is well used to achieve firm joining.
Hereinafter, in preferred exemplary embodiments of the present invention, a thermoplastic composite material, a protusion for joining which is formed on the surface of the thermoplastic composite material, a metal member, and an intended method of manufacturing a jointed body of a thermoplastic composite material and a metal member according to the method of the present invention wil be sequentially described in detail.

[1] Thermoplastic composite material

A thermoplastic composite material used in the present invention is a fiber-reinforced composite material that includes reinforcing fibers and a thermoplastic resin as a matrix.
In the present invention, the thermoplastic composite material is preferably in a sheet form. That is, a sheet-form material which substantially integrates reinforcing fibers or structures thereof, such as woven knitted goods or a mat, (hereinafter, sometimes referred to as a "reinforcing fiber structure") with a thermoplastic resin is preferably used. In the present invention, the form of the thermoplastic composite material is not particularly limited. The form of the thermoplastic composite material may be the sheet form as described above, but is not limited to the sheet form. A plate form may be employed. The shape of the thermoplastic composite material may have a curved portion. The shape of the thermoplastic composite material may be a three-dimensional shape which has a cross-section of a T-, L-, U-, or hat-shape or a combination thereof, and the method of manufacturing the joined body of the present invention may be employed in the thermoplastic composite material formed into these various shapes. In all cases, it is preferable that the shape of a joining portion of the thermoplastic composite material and the shape of a joining portion of the metal member corresponding to the thermoplastic composite material substantially conform to each other.

(Reinforcing fibers and structure thereof)

As for reinforcing fibers included in the thermoplastic composite material, one kind or two or more kinds of carbon fibers, glass fibers, and aramide fibers are preferably used. Among them, PAN-based or pitch-based carbon fibers are preferable. The form of the reinforcing fibers is not particularly limited, and the reinforcing fibers may be continuous fibers, or discontinuous fibers.

The continuous fibers may be formed into fabric, or a so-called UD sheet in which continuous fibers are aligned in one direction to be formed into a sheet. As for the UD sheet, multi-layered sheets which are stacked such that fiber orientation directions of respective layers cross each other (for example, alternately stacked in orthogonal directions) may be used. The average fiber diameter of the continuous fibers generally preferably ranges from 5 μm to 20 μm, and more preferably from 5 μm to 12 μm.

The discontinuous reinforcing fibers may be formed into a sheet, in which the reinforcing fibers are formed into a sheet by wet sheet-making, or formed into a mat, in which the discontinuous reinforcing fibers are dispersed and disposed to overlap each other. In this case, the average fiber diameter preferably ranges from 5 μm to 20 μm, and in a case of carbon fibers, the average fiber diameter more preferably ranges from 5 μm to 12 μm. The average fiber length of the reinforcing fibers preferably ranges from 3 mm to 100 mm, more preferably from 10 mm to 100 mm, and particularly preferably from 12 mm to 50 mm. In the latter mat-form material, the average fiber length of the reinforcing fibers included in the mat is important. In a case where a protrusion is formed by the method to be described later, when the average fiber length is shorter than the foregoing range, the ratio of reinforcing fibers included in the protrusion may be likely to be increased. Thus, even when the protrusion is molten and fused on a metal member surface, a sufficient joining strength may not be obtained. In contrast, when reinforcing fibers having an average fiber length within the foregoing range is used, reinforcing fibers existing within the protrusion are dramatically decreased. Thus, fibers are hardly included in the protrusion, thereby achieving a good joining strength.

In the present invention, the thermoplastic composite material preferably includes a structure formed by discontinuous reinforcing fibers, as a substrate. The reinforcing fiber structure is preferably a random mat in which discontinuous reinforcing fibers are substantially two-dimensionally randomly oriented. Here, "substantially two-dimensionally randomly oriented" means that the reinforcing fibers are oriented disorderly rather than in a specific direction such as one direction in in-plane directions of the mat, and as a whole, are disposed within a plane without exhibiting a specific directivity. Accordingly, the thermoplastic composite material suitable for the present invention is a composite material that includes a substantially isotropic random mat not having anisotropy within a plane, as a substrate.

In the random mat, all or most of the reinforcing fibers may be present in an opened state in the form of single fibers. In particular, an isotropic random mat in which fiber bundles including a given number or more of single fibers, and fiber bundles in the form of single fibers or the form close to the single fibers are mixed at a specific ratio is preferable. Such an isotropic random mat and a manufacturing method thereof are disclosed in detail in specifications such as PCT/JP2011/70314 (WO No. 2012/105080) and Japanese Patent Application No. 2011-188768 (Japanese Patent Laid-Open Publication No. 2013-049208).

The above described preferable two-dimensionally isotropic random mat is an isotropic random mat in which reinforcing fiber bundles (A) constituted by the reinforcing fibers of a critical number of single fiber or more, defined by the following Equation (a), and reinforcing fiber bundles ($B_1$) constituted by the reinforcing fibers less than of the critical number of single fiber and/or single reinforcing fibers ($B_2$) are mixed. The ratio of the reinforcing fiber bundles (A) to the total amount of fibers in the isotropic random mat preferably ranges from 20 Vol% to 99 Vol%, and more preferably ranges from 30 Vol% to 90 Vol%. Further, the average number (N) of fibers in the reinforcing fiber bundles (A) satisfies the following Equation (b).

$$\text{Critical number of single fiber} = 600/D \qquad \text{(a)}$$

$$0.6\times10^4/D^2<N<1\times10^5/D^2 \qquad \text{(b)}$$

(wherein D represents an average fiber diameter (μm) of single reinforcing fibers.)

It is preferable that the average number (N) of fibers in the reinforcing fiber bundles (A) is greater than $0.6\times10^4/D^2$ because it is easy to obtain a high fiber volume fraction (Vf) of reinforcing fibers. Also, it is preferable that the average number (N) of fibers in the reinforcing fiber bundles (A) is less than $1\times10^5/D^2$, because a locally thick portion hardly occurs, thereby suppressing occurrence of voids. The composite material employing such a random mat has an advantage in that a protrusion may be easily on the surface of the composite material.

In a case where a protrusion is formed on a composite material surface by the method to be described later,

when reinforcing fibers in the composite material have an average fiber length and a bundle state within the foregoing ranges, a protrusion having the reinforcing fibers therewithin at a significantly low ratio may be formed. As a result, in joining of the composite material to the metal member, a firmer joining state may be achieved.

(Preferred Random Mat and Manufacturing Method Thereof)

The two-dimensionally isotropic random mat may be obtained as follows: strands including a plurality of reinforcing fibers are continuously slit along a fiber length direction, if necessary, into a plurality of narrow width strands with a width ranging from 0.05 mm to 5 mm, and then are continuously cut into discontinuous fiber bundles with an average fiber length ranging from 3 mm to 100 mm, especially from 10 mm to 100 mm, and a gas is sprayed to the thus-cut fiber bundles to open the fiber bundles, and the opened fiber bundles are deposited on, for example, a breathable conveyor net in a layer form to obtain the mat. Here, a thermoplastic resin in a grain form or a short fibrous form may be deposited together with reinforcing fibers on a breathable conveyor net, or a molten thermoplastic resin in a film form may be supplied and penetrated to a reinforcing fiber layer in a mat form, to manufacture the isotropic random mat containing the thermoplastic resin. In this method, by adjusting the opening condition, reinforcing fiber bundles may be opened such that reinforcing fiber bundles (A) constituted by the reinforcing fibers of a critical number of single fiber or more, defined by the foregoing Equation (a), and reinforcing fiber bundles constituted by the reinforcing fibers less than of the critical number of single fiber and/or single reinforcing fibers ($B_2$) are mixed. Thus, in the isotropic random mat, the ratio of the reinforcing fiber bundles (A) to the total amount of reinforcing fibers preferably ranges from 20 Vol% to 99 Vol%, more preferably ranges from 30 Vol% to 90 Vol%, and particularly preferably 50 Vol% to 90 Vol%, and the average number (N) of fibers in the reinforcing fiber bundles (A) preferably satisfies the foregoing Equation (b).

In order that the average number (N) of fibers in the reinforcing fiber bundles (A) is within the foregoing range, in the foregoing manufacturing method of the preferred random mat, they may be controlled by adjusting the size of fiber bundles to be subjected to a cutting process, for example, the bundle width or the number of fibers per width. Specifically, there may be a method of widening the width of fiber bundles through opening or the like and subjecting the fiber bundles to a cutting process, or a method of providing a slit process prior to a cutting process. Otherwise, the fiber bundles may be cut and slit at once.

In the above described two-dimensional isotropic random mat, the reinforcing fibers have a fiber areal weight ranging from 25 g/m$^2$ to 4,500 g/m$^2$, in which the ratio of the reinforcing fiber bundles (A) constituted by the reinforcing fibers of a critical number of single fiber or more, defined by the foregoing Equation (a), to the total amount of reinforcing fibers is within the above described range, and the average number (N) of fibers in the reinforcing fiber bundles (A) satisfies the foregoing Equation (b). Thus, the random mat as a composite material is good in the balance of moldability and mechanical strength. Such a thermoplastic composite material may be joined to a metal member to provide a joined body which is good in joining strength.

Such a manufacturing method of a random mat is disclosed in WO No. 2012/105080, and may be appropriately referred to in the present invention.

In the thermoplastic composite material employing the foregoing random mat, discontinuous reinforcing fibers are not oriented in a specific direction within a plane, but disposed to be dispersed in random directions. That is, such a thermoplastic composite material is a planar-isotropic material. When a shaped product is obtained from such a thermoplastic composite material, isotropy of reinforcing fibers in the thermoplastic composite material is also maintained in the shaped product. In the shaped product obtained from the thermoplastic composite material, the isotropy of the composite material may be evaluated by obtaining the ratio of tensile moduli in two perpendicular directions. When a ratio obtained by dividing the larger one by the smaller one between elastic modulus values in the two perpendicular directions of the shaped product obtained from the composite material is not greater than 2, the product is considered to be isotropic. When the ratio is not greater than 1.3, the product is considered to be excellent in isotropy.

The discontinuous reinforcing fibers that constitute the thermoplastic composite material obtained from the isotropic random mat include somewhat long reinforcing fibers, which is desirable because a sufficient reinforcing function may be developed and a protrusion including a small amount of reinforcing fibers may be formed on the surface of the thermoplastic composite material. The length of reinforcing fibers in the thermoplastic composite material is represented by an average fiber length of reinforcing fibers in the obtained thermoplastic composite material. In the measurement method of the average fiber length, for example, fiber lengths of randomly extracted 100 reinforcing fibers are measured to a unit of 1 mm by using a caliper or the like, and the average thereof is obtained. The average fiber length of the reinforcing fibers preferably ranges from 3 mm to 100 mm and more preferably from 10 mm to 100 mm. The random mat may include reinforcing fibers with the single fiber length, or reinforcing fiber with different fiber lengths in combination.

As described above, the average fiber diameter of reinforcing fibers preferably ranges from 5 $\mu$m to 20 $\mu$m, and particularly preferably from 5 $\mu$m to 12 $\mu$m. The adhesion strength between reinforcing fibers and a thermoplastic resin as a matrix in a strand shear test is preferably 5 MPa or more. This strength may be improved by a method of changing a surface oxygen concentration ratio (O/C) of reinforcing fibers or a method of increasing the adhesion strength

between fibers and a matrix resin by adding a sizing agent to reinforcing fibers, as well as selection of a matrix resin.

Specifically, when the average fiber diameter of reinforcing fibers included in the thermoplastic composite material ranges from 5 μm to 7 μm, the critical number of single fiber defined by the foregoing Equation (a) ranges from 86 to 120. When the average fiber diameter of reinforcing fibers is 5 μm, the average number (N) of fibers in the reinforcing fiber bundles (A) is greater than 240 and less than 4,000, particularly preferably ranges from 300 to 2,500, and more preferably ranges from 400 to 1,600. When the average fiber diameter of reinforcing fibers is 7 μm, the average number (N) of fibers in the reinforcing fiber bundles (A) is greater than 122 and less than 2,040, particularly preferably ranges 150 to 1500, and more preferably ranges from 200 to 800.

It is preferable that the reinforcing fiber bundles (A) are thin. The ratio of reinforcing fiber bundles with a thickness of 100 μm or more is preferably less than 3% to the number of all reinforcing fiber bundles (A). It is preferable that the ratio of reinforcing fiber bundles with a thickness of 100 μm or more is less than 3% because the inside of fiber bundles may be easily impregnated with a thermoplastic resin. More preferably, the ratio of reinforcing fiber bundles with a thickness of 100 μm or more is less than 1%. In order that the ratio of reinforcing fiber bundles with a thickness of 100 μm or more is less than 3%, a method of widening the width of reinforcing fiber strands to be used so as to obtain strands with thin thickness prior to a cutting process may be employed.

(Matrix resin)

Examples of the kind of a thermoplastic resin that constitutes a matrix of the thermoplastic composite material may include a vinyl chloride resin, a vinylidene chloride resin, a polyvinyl acetate resin, a polyvinyl alcohol resin, a polystyrene resin, an acrylonitrile-styrene resin (AS resin), an acrylonitrile-butadiene-styrene resin (ABS resin), an acrylic resin, a methacrylate resin, a polyethylene resin, a polypropylene resin, various kinds of thermoplastic polyamide resins, a polyacetal resin, a polycarbonate resin, thermoplastic polyester resin, a polybutylene terephthalate resin, a polyarylate resin, a polyphenylene ether resin, a polyphenylene sulfide resin, a polysulfone resin, a polyethersulfone resin, a polyetherether ketone resin, and a polylactic acid resin. Among them, preferable examples may include nylon, polycarbonate, polyoxymethylene, polyphenylenesulfide, polyphenylene ether, modified polyphenylene ether, polyethylene terephthalate, polybutylene terephthalate, polyethylene naphthalate, polyethylene, polypropylene, polystyrene, polymethylmethacrylate or a copolymer including them as main components, an AS resin, and an ABS resin.

Among them, at least one kind selected from the group including nylon, polypropylene, polycarbonate, and polyphenylenesulfide is preferable in the balance of cost and physical properties. As for the nylon (hereinafter, simply referred to as "PA"), at least one kind selected from the group including PA6 (also referred to as polycaproamide, polycaprolactam, poly ε-caprolactam), PA26 (polyethylene adipamide), PA46 (polytetramethylene adipamide), PA66 (polyhexamethylene adipamide), PA69 (polyhexamethylene azelamide), PA610 (polyhexamethylene sebacamide), PA611 (polyhexamethylene undecamide), PA612 (polyhexamethylene dodecamide), PA11 (polyundecanamide), PA12 (polydodecanamide), PA1212 (polydodecamethylene dodecamide), PA6T (polyhexamethylene terephthalamide), PA6I (polyhexamethylene isophthalamide), PA912 (polynonamethylene dodecamide), PA1012 (polydecamethylene dodecamide), PA9T (polynonamethylene terephthalamide), PA9I (polynonamethylene isophthalamide), PA10T (polydecamethylene terephthalamide), PA10I (polydecamethylene isophthalamide), PA11T (polyundecamethylene terephthalamide), PA11I (polyundecamethylene isophthalamide), PA12T (polydodecamethylene terephthalamide), PA12I (polydodecamethylene isophthalamide), and polyamide MXD6 (polymethaxylylene adipamide) is preferable. These thermoplastic resins may include additives such as a stabilizer, a flame retardant, a pigment, and a filler, if necessary. These thermoplastic resins may be used alone or in combination of two or more thereof.

(Constitution of Thermoplastic Composite Material)

A UD sheet having continuous fibers unidirectionally aligned, or a sheet obtained through sheet-making or a random mat, which is constituted by discontinuous fibers, is stacked in a single layer or multi-layers, and heated and pressurized in a state where a thermoplastic resin is included. Then, the thermoplastic resin present in the sheets or the mat is molten and impregnated between fibers to provide a thermoplastic composite material including the thermoplastic resin as a matrix. In this case, a thermoplastic resin may be supplied at the time of manufacturing a sheet or a mat of reinforcing fibers. Otherwise, after a sheet or a mat of reinforcing fibers is manufactured, a layer of a thermoplastic resin may be stacked, and then heated and pressurized to impregnate the sheet or the mat with the resin.

The content of a matrix resin in the thermoplastic composite material preferably ranges from 30 parts to 200 parts by weight with respect to 100 parts by weight of reinforcing fibers. The content of the matrix resin more preferably ranges from 30 parts to 150 parts by weight, and further more preferably from 35 parts to 100 parts by weight with respect to 100 parts by weight of the reinforcing fibers. It is preferable that the content of the thermoplastic resin is 30 parts by weight or more with respect to 100 parts by weight of the reinforcing fibers because dry reinforcing fibers not covered with the thermoplastic resin are hardly present. Also, it is preferable that the content is 200 parts by weight or less,

because the reinforcing fibers are not decreased in their ratio and thus are appropriate as a structural material.

The thickness of the thermoplastic composite material preferably ranges from 0.5 mm to 10 mm in consideration of moldability, especially, formability with a mold, and most particularly preferably ranges from 1 mm to 5 mm. Also, such a composite material may be used in combination of layers of two or more thereof.

The thermoplastic composite material used in the present invention may include additives such as various kinds of fibrous or non-fibrous fillers of an organic fiber or an inorganic fiber, a flame retardant, an anti-UV agent, a stabilizer, a releasing agent, a pigment, a softening agent, a plasticizer and a surfactant within a limitation that does not impair the object of the present invention.

The form of the thermoplastic composte material may a long-fiber pellet which is injection-molded into a shape by using an injection molding machine, in which the pellet is obtained by impregnating reinforcing fibers in a form of a continuous fiber with a molten thermoplastic resin with an adjusted viscosity, and cutting the fibers. Otherwise, the form of the thermoplastic composite material may be a unidirectional aligned sheet (UD sheet) impregnated with a molten thermoplastic resin, in which in the UD sheet, continuous fiber strands are drawn and aligned in parallel. A thermoplastic composite material obtained by impregnating the foregoing two-dimensional isotropic random mat with a molten thermoplastic resin is particularly preferable.

A preferred thermoplastic composite material used in the present invention is a composite material that includes reinforcing fibers with an average fiber length ranging from 3 mm to 100 mm, preferably from 10 mm to 100 mm, and particularly preferably from 15 mm to 80 mm, and a thermoplastic resin in a ratio of 30 parts to 200 parts by weight with respect to 100 parts by weight of reinforcing fibers. In the composite material,

(i) a sheet form with a thickness ranging from 0.5 mm to 5 mm is employed,
(ii) reinforcing fibers are randomly disposed in in-plane directions,
(iii) as a whole, the fiber areal weight ranges from 25 $g/m^2$ to 4500 $g/m^2$,
(iv) the ratio of reinforcing fiber bundles (A) constituted by the reinforcing fibers of a critical number of single fiber or more, defined by the following Equation (a), to the total amount of reinforcing fibers ranges from 50 Vol% to 90 Vol%, and
(v) the average number (N) of fibers in the reinforcing fiber bundles (A) satisfies the following Equation (c).

$$\text{Critical number of single fiber} = 600/D \qquad \text{(a)}$$

$$0.7\times10^4/D^2<N<1\times10^5/D^2 \qquad \text{(c)}$$

(wherein D represents an average fiber diameter (μm) of single reinforcing fibers.)

(Protrusion of Thermoplastic Composite Material)

A thermoplastic composite material used in the present invention has a protrusion on its surface to be joined to a metal member, in which the protrusion includes a thermoplastic resin.

In the present invention, when the foregoing thermoplastic composite material is joined to a metal member, at least one protrusion mainly including a thermoplastic resin is preferably formed in advance on the surface of the thermoplastic composite material to be joined to the metal member.

The thermoplastic resin included in each protrusion is preferably the same kind of resin as the matrix of the thermoplastic composite material.

In the protrusion, the volume fraction of the thermoplastic resin is preferably 50% or more, and particularly preferably 70% or more. When the volume fraction of the thermoplastic resin in the protrusion is 50% or more, reinforcing fibers are included in a small amount in the protrusion. Thus, only when the resin is molten, the joining strength between the thermoplastic composite material and the metal member is enough.

The content of the thermoplastic resin in the protrusion preferably ranges from 50 wt% to 100 wt%, more preferably from 70 wt% to 100 wt%, and further more preferably from 85 wt% to 100 wt%.

The shape of each protrusion may take a hemisphere, a cylinder, a cone, a truncated cone, a prism, a pyramid, a truncated pyramid, and geometric patterns and designs or any other shape that may be regarded to be similar to them. The protrusion may include one or more ridge-like projections. When a plurality of ridge-like protrusions are formed, they may be provided to cross each other, for example, as a ridge in a grid form. The tip end of each protrusion may be sharpened, but does not need to be necessarily sharpened. The respective protrusios may have the same shape, or have a difference in shapes.

The protrusion alone or a combination of two or more thereof may constitute a letter or may be shaped in a number shape. Examples of the shape of one protrusion may include alphabet, kana character, Arabic alphabet, Hangeul, and pictograms (such as *, ¥, $, !, &, #, @, ?, ■, ♦, double circle, star, <, >, hallow form (e.g., ring)). When the shape of the protrusion is a number, examples of the shape may include 0 to 9, Chinese numerals, and roman numerals. The letter and the number may be used alone or in combination thereof. A preferable specific example thereof may include "Teijin".

The size of each protrusion may be arbitrarily set, and may be varied according to a location. Further, a plurality of protrusions may be regularly arranged or may be randomly present.

The height of a protrusion preferably ranges from 1% to 55%, and more preferably from 5% to 50% with respect to a thickness of a portion of the thermoplastic composite material not having the protrusion.

The height of the protrusion preferably ranges from 0.1 mm to 5 mm and more preferably from 0.2 mm to 2 mm.

When a plurality of protrusions with different heights are present in combination on the surface of the thermoplastic composite material, an average value of the respective heights is preferably within the above described range. When the height of a protrusion is too large, a large amount of protrusion-forming resin is blurring and spreads out of the periphery of a joining portion at the time of joining a thermoplastic composite material to a metal member. Thus, post-processing of a joined body becomes complicated. When the height of a protrusion is not enough, the amount of a resin for weld-joining may become insufficient and thus the joining strength may be insufficient.

When the shape of a protrusion is a hemisphere, a cylinder, a cone, or a truncated cone, the average diameter of a bottom portion (base portion) of the protrusion preferably ranges from 0.5 mm to 100 mm. When the shape of a protrusion is a prism, a pyramid, or a truncated pyramid, the average length of one side of a bottom portion of the protrusion preferably ranges from 0.5 mm to 100 mm. When the shape of a protrusion is a ridge-like projection, the average width preferably ranges from 0.5 mm to 100 mm. All cases are preferred as long as the length of a shortest portion of a bottom portion (base portion) of each protrusion is less than the average fiber length of reinforcing fibers because a protrusion hardly including reinforcing fibers may be formed, even in a case where the protrusion is formed by the molding method to be described below.

The average interval of protrusions disposed on a surface of the thermoplastic composite material preferably ranges from 0.6 mm to 110 mm. Here, the term "interval" refers to an average distance between adjacent protrusion centers. The positions on the surface of the thermoplastic composite material where protrusions are formed are set to be positions where a thermoplastic composite material and a metal member are expected to be joined to each other. The number of protrusions is appropriately selected according to a joining area, but a total area of bottom portions (base portions) of protrusions to be welded at once preferably ranges from about 0.8 $m^2$ to 20 $m^2$. When the shape of protrusions is a separate projection such as a hemisphere, a cylinder, a cone, a truncated cone, a prism, a pyramid, or a truncated pyramid, the density of the protrusions preferably ranges from 1 to 20 per 1 $cm^2$ of a thermoplastic composite material's area to be joined to a metal member.

On the surface of a thermoplastic composite material, the ratio of a total area of the bottom portions of the protrusions to a surface area of a portion to be joined to a metal member preferably ranges from 1% to 80%, more preferably from 1% to 60%, and further more preferably from 5% to 50%. It is preferable that the ratio of a total area of bottom portions of protrusions is 1% or more because a joining strength is increased. Meanwhile, it is preferable that the ratio is 80% or less because an excess of a resin hardly blurs at the time of joining.

A protrusion on a surface of a thermoplastic composite material may be formed simultaneously with molding of the thermoplastic composite material. Otherwise, a protrusion may be provided on a flat surface of a thermoplastic composite material by means of thermal spraying or the like. The formation of a protrusion simultaneously with molding is preferable. Specifically, for example, the following method may be employed:

1) a method of placing a thermoplastic composite material in a mold having a recessed portion, followed by heating and pressurizing to mold the protrusion, and
2) a method of embossing a thermoplastic composite material with a roller having a recessed portion on the surface thereof.

The method 1) is industrially advantageous in that a protrusion may be formed simultaneously with pressure-molding of a composite material (so-called dry sheet) impregnated with a thermoplastic resin into a given shape. The method 2) is advantageous in that protrusions may be continuously formed. In the methods 1) and 2), a protrusion including reinforcing fibers at a relatively small content is formed on the surface of a thermoplastic composite material. Thus, in general, the resin content of each protrusion becomes larger than the resin content of an original thermoplastic composite material. Accordingly, according to the methods 1) and 2), a protrusion including a thermoplastic resin in a volume fraction of 50% or more, and preferably of 70% to 100% may be easily formed. In a method for forming a protrusion by thermal-spraying a thermoplastic resin on the surface of a thermoplastic composite material, a protrusion containing 100% of thermoplastic resin is inevitably formed.

The thermoplastic resin included in the protrusion is preferably the same kind of resin as the matrix resin of the thermoplastic composite material, as described above. In the foregoing methods 1) and 2), it is natural that the thermoplastic resin included in the protrusion is the same as the matrix resin of the thermoplastic composite material. However, even when a protrusion is formed by other means, both materials may be made of the same kind of resin to achieve a good joining strength.
Accordingly, the thermoplastic composite material suitable for the present invention is a fiber-reinforced composite material that includes reinforcing fibers and a thermoplastic resin as a matrix, and that includes a joining portion to be joined to another member such as a metal member, and a protrusion including a thermoplastic resin on the surface of the joining portion.

[2] Metal Member

In the present invention, specific examples of a metal member to be joined to a thermoplastic composite material may include metals such as iron, stainless steel, aluminum, copper, brass, nickel, and zinc, and alloys thereof, but it is preferable that the metal is mainly made of an element such as iron or aluminum. Here, "mainly made" means that the content is 90 wt% or more.
In particular, the metal member is appropriately made of irons such as rolled steel for general structure (SS material), cold rolled steel (SPCC material), and high tension material (High Tensile Strength Steel Sheets), stainless steels such as SUS304 and SUS316, and aluminum of 1000 to 700 series and alloys thereof. The metal member may be made of two or more kinds of metals, and may have a metal-plated surface. The shape thereof is not limited to a flat-plate shape as long as a joining surface with a thermoplastic composite material is secured, and a metal member having any other shape may be used. For example, a metal member may have a cross-section of an L-, T-, H-, U-, or reversed V- shape or have a cylindrical shape, and also may have a level difference or undulation, irregularities, a curved surface on the surface thereof. According to the present invention, a thermoplastic composite material may be firmly joined to such a complicated-shaped metal member without a gap.

(Formation of Coating Layer)

In the present invention, a coating layer including an organic compound having a polar functional group of providing and improving a joining property is preferably formed on a surface of a metal member to be joined to a thermoplastic composite material and is used for joining.
The coating layer is preferably formed by treating a metal member surface with a solution including an organic compound having a polar functional group.
A triazine thiol derivative to be described below is preferable as the organic compound having a polar functional group.
The coating layer is preferably formed on the whole surface of the metal member to be joined to the thermoplastic composite material, but does not necessarily need to be formed on the whole surface. The coating layer preferably has a location and a thickness which allow a sufficient joining strength (adhesion) to be secured.
Examples of the triazine thiol derivative for formation of the preferred coating layer may preferably include a dehydrated silanol-containing triazine thiol derivative or an alkoxysilane-containing triazine thiol derivative, which is expected to be chemically bonded to a metal. Such an alkoxysilane-containing triazine thiol derivative is preferably at least one selected from the group consisting of the compounds represented by following Formulae (1) and (2), and the compound represented by following Formula (3).

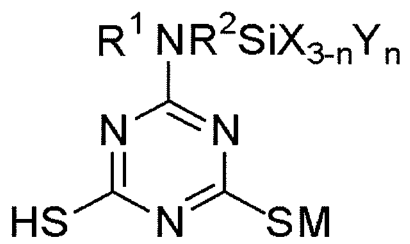
(1)

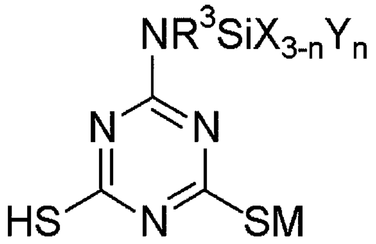

(2)

In Formulae (1) and (2), $R^1$ represents any one of H-, $CH_3$-, $C_2H_5$-, $CH_2$=$CHCH_2$-, $C_4H_9$-, $C_6H_5$-, and $C_6H_{13}$-, and $R^2$ represents any one of -$CH_2CH_2$-, -$CH_2CH_2CH_2$-,-$CH_2CH_2CH_2CH_2CH_2CH_2$-, -$CH_2CH_2SCH_2CH_2$-, and -$CH_2CH_2NHCH_2CH_2CH_2$-. $R^3$ represents -$(CH_2CH_2)_2CHOCONHCH_2CH_2CH_2$- or -$(CH_2CH_2)_2N$-$CH_2CH_2CH_2$-, in which N and $R^3$ form a cyclic structure. In Formulae, X represents any one of $CH_3$-, $C_2H_5$-, n-$C_3H_r$, i-$C_3H_7$-, n-$C_4H_9$-, i-$C_4H_9$-, t-$C_4H_9$-, and $C_6H_5$-, and Y represents any one of $CH_3O$-, $C_2H_5O$-, n-$C_3H_7O$-, i-$C_3H_7O$-, n-$C_4H_9O$-, i-$C_4H_9O$-, t-$C_4H_9O$-, and $C_6H_5O$-. In Formulae, n represents an integer of 1 to 3, and M represents -H or an alkali metal.

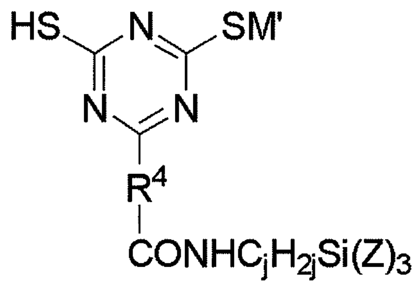

(3)

In Formula (3), $R^4$ represents -S-, -O-, -$NHCH_2C_6H_4O$-, -$NHC_6H_4O$-, -$NHC_6H_3(Cl)O$-, -$NHCH_2C_6H_3(NO_2)O$-, -$NHC_6H_3(NO_2)O$-, -$NHC_6H_3(CN)O$-, -$NHC_6H_2(NO_2)_2O$-, - $NHC_6H_3(COOCH_3)O$-, -$NHC_{10}H_6O$-, -$NHC_{10}H_5(NO_2)O$-, -$NHC_{10}H_4(NO_2)_2O$-, -$NHC_6H_4S$-,-$NHC_6H_3(Cl)S$-, -$NHCH_2C_6H_3(NO_2)S$-, -$NHC_6H_3(NO_2)S$-, -$NHC_6H_3(CN)S$-, - $NHC_6H_2(NO_2)_2S$-, -$NHC_6H_3(COOCH_3)S$-, -$NHC_{10}H_6S$-, -$NHC_{10}H_5(NO_2)S$-, or - $NHC_{10}H_4(NO_2)_2S$-, M' represents -H or an alkali metal, Z represents an alkoxy group, and j represents an integer of 1 to 6.

In Formulas (1) to (3), the alkali metal is at least one selected from the group consisting of lithium, sodium, potassium, rubidium, and cesium.

As a triazine thiol derivative particularly preferably used in the present invention, specifically, an alkoxysilane-containing triazine thiol derivative exhibiting an excellent effect, such as triethoxysilylpropyl amino triazine thiol monosodium may be exemplified, and its formula is represented by following Formula (4).

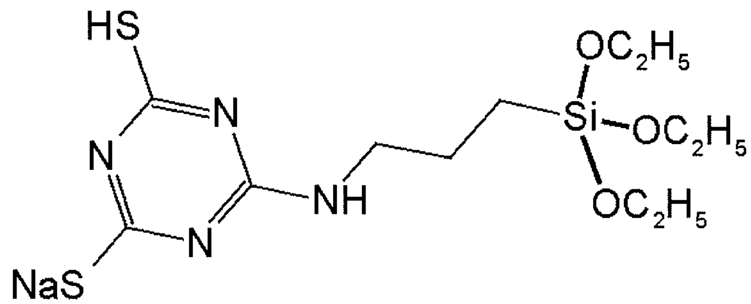

(4)

As a method of forming a triazine thiol derivative-containing layer, a method disclosed in WO No. 2009/157445 pamphlet, specifically, a method of immersing a metal member in alkoxysilane-containing triazine thiol and an ethanol aqueous solution, pulling out the metal meber to be subjected to heat treatment, completating reaction and drying may be exemplified. In the triazine thiol derivative-containing layer, materials other than the triazine thiol derivative may be included within a range that does not impair the object of the present invention.

In the present invention, the coating layer is preferably the above described triazine thiol derivative-containing layer, and also may be a layer including another organic compound having a function equivalent to the triazine thiol derivative-containing layer, for example, a layer including an organic compound having a polar functional group such as a silane coupling agent, a hydroxyl group or a carboxyl group.

(Formation of Metal Compound Layer)

In the present invention, it is preferable that between the coating layer including an organic compound having a polar functional group and the metal member surface, a metal compound layer including hydroxide, carboxylate, phosphate, or sulfate is further included to improve a joining strength. As a method of forming the metal compound layer, a method disclosed in WO No. 2009/157445 pamphlet may be exemplified. For example, a method of immersing a metal member to be joined to a thermoplastic composite material in acid such as hydrochloric acid, sulfuric acid, or phosphoric acid, and a method of applying or spraying the acid on the surface of a metal member to be joined. In the present invention, it is preferable that the metal member is treated with such a metal compound, and its surface is formed with the foregoing coating layer of the organic compound.

[3] Joining of Thermoplastic Composite Material to Metal Member

In the method of manufacturing the joined body of the present invention, a thermoplastic composite material having at least one protrusion including a thermoplastic resin on the surface thereof is laid on a metal member such that the surface formed with the protrusion comes in contact with the surface of the metal member to be joined, and the thermoplastic resin of the protrusion is molten by heating to weld the resin forming the protrusion formed on the surface of the thermoplastic composite material into the metal member surface. Then, an intended joined body is obtained.
Here, pressurization is preferably made along the joining direction while the thermoplastic resin of the protrusion is molten.
A heating method for welding may include, for example,

(A) a heating method of melting a thermoplastic resin constituting a protrusion on the surface of a thermoplastic composte material by heating therough a heating means such as an electric heater, an infrared heater, or an IH heater, or heat generation through mechanical vibration, ultrasonic wave, or high frequency, while the surface of the thermoplastic composite material having the protrusion is in contact with (preferably, in close contact with) a metal member, and
(B) a method of heating and melting a thermoplastic resin constituting a protrusion on the surface of a thermoplastic composite material by heat transfer from a metal member, in which the surface of the metal member is heated in advance up to a temperature equal to or greater than the melting temperature of the thermoplastic resin constituting the protrusion, and the thermoplastic composite material side having the protrusion is laid on the heated metal member.

When the protrusion is heated and molten, the joining surface is preferably pressurized at a pressure of 0.01 MPa to 2 MPa. The pressure more preferably ranges from 0.02 MPa to 1.5 MPa, and further more preferably from 0.05 MPa to 1 MPa. When the pressure is 0.01 MPa or more, a good joining force may be easily obtained, and also the shape may be maintained without spring-back of the thermoplastic composite material at the time of heating. This increases the material strength. When the pressure is 2 MPa or less, the pressurized portion is not crushed, and the shape retention is easy, thereby increasing the material strength. By pressurization, the molten resin is easily flowed to the vicinity of the protrusion. Thus, even if small gaps occur in a joining surface, the gaps are filled with the molten resin. Accordingly, firm joining is achieved.
When a metal-composite shaped product in a given shape, in which a thermoplastic composite material including a thermoplastic resin as a matrix is joined to a metal member, is manufactured by melting the thermoplastic resin of a protrusion through heating as mentioned above, the metal member and the protrusion on the surface of the thermoplastic composite material are disposed to be in contact with each other within a mold for molding the thermoplastic composite material such that they are welded to each other by pressurizing and heating. Then, the joining to the metal member is completed in the same process as in the molding of the thermoplastic composite material. Thus, the joining of the metal member to the thermoplastic composite material may be quickly performed. Therefore, this method is industrially highly superior to a conventional method of using a composite material including a thermosetting resin as a matrix. It is also possible to perform the joining of the thermoplastic composite material to the metal member, and the molding of a product from the both materials at once.
The joining surface between the thermoplastic composite material and the metal member is not limited to a flat surface. The surface may be a curved surface, or have irregularities. In the present invention, even if a few gaps exist between the thermoplastic composite material and the metal member to be joined to each other, the gaps are filled with a molten thermoplastic resin. Thus, the joining may be performed without any problem.

[4] Joint Body of Thermoplastic Composite Material and Metal Member

According to the present invention, a joined body of a thermoplastic composite material and a metal member firmly joined to each other, or a metal-composite shaped product obtained by molding the joined body into a shape may be manufactured with high productivity within a short time. The joining strength between the metal and the thermoplastic composite material of the joined body may be evaluated by a tension test. According to the present invention, the joining strength of both materials is at least 5 MPa, and in some cases, the joining strength of substantially about 50 MPa may be achieved. Accordingly, the joined body and the metal-composite shaped product obtained by the present invention may be preferably used as a structure member requiring strength. Examples of the structure member may include components or structural materials that constitute mobile bodies such as cars, aircrafts, railroad vehicles, or ships. Further, they are useful as a structural material for housings of electrical electronic devices, sports equipment, mechanical devices, building materials, or furniture. The number of bonding portions of the joined body is not limited, but may be arbitrarily selected according to joining conditions by single lap or double lap. Among them, in a case of double lap, the joining area is doubled, and thus the bonding strength is also doubled.

Example

Hereinafter, the present invention will be described in detail with reference to examples, but the present invention is not limited thereto. In each example, conditions for measurement and evaluation of physical properties are as follows.

(1) Joining Strength

Five sheets of a joined body of a thermoplastic composite material and a metal member were prepared according to the description of examples, and a tension test for the respective sheets was performed at a tension speed of 2 mm/min using a universal testing machine " Instron (registered trademark) 5587" to obtain values of tensile strength as joining strength values, and the joining strength for the joined body was expressed as an average value of the five sheets.

(2) Measurement of Average Fiber Length

In the measurement of an average fiber length of reinforcing fibers, a method of measuring fiber lengths of 100 reinforcing fibers randomly extracted from a thermoplastic composite material to a unit of 1 mm by using a caliper or the like, and obtaining the average thereof is employed.

(3) Analysis of Fiber Bundles of Random Mat Material

An analysis of fiber bundles of a random mat material obtained from Reference Example 2B and Example 4 was performed based on the method disclosed in PCT/JP2011/70314 (WO No. 2012/105080).

(4) Measurement of Protrusion of Thermoplastic Composite Material Surface

The height, bottom surface diameter, and one-side length of a protrusion of a thermoplastic composite material surface were measured by actually measuring respective dimensions of five randomly-selected protrusions among protrusions formed on the surface of a thermoplastic composite material, and expressing the values as an average of the five protrusions. The ratio of a total area of protrusions on the surface of a thermoplastic composite material was expressed as a ratio (%) of a total area of bottom portions of the respective protrusions to the area of the surface, on which the protrusions are included, of the thermoplastic compsite material formed with the protrusions. The ratio of a thermoplastic resin in the protrusion was obtained by cutting five randomly-selected protrusions from the base thereof, apart from the foregoing dimension measurement, actually measuring the weight of each protrusion and the weight of the thermoplastic resin in each protrusion, and expressing the average value of the contents of the thermoplastic resin as wt%.

<Reference Example 1> Manufacturing of Thermoplastic Composite Material Shaped Plate (I) of 0°/90° Alternately Stacked Material of Continuous Fibers

Strands of carbon fibers "TENAX" (registered trademark, manufactured by TOHO TENAX Co.,Ltd.), STS40-24KS (average fiber diameter of 7 μm) and nylon 6 films (manufactured by UNITIKA LTD., "emblem" (registered trademark) ON, 25 μm thickness) were sequentially stacked such that a layer of fiber direction 0° and a layer of fiber direction 90° were alternately disposed to form 64 layers (64 carbon fiber layers, 65 nylon film layers). This stacked body

was set within a mold having recessed portions on the top thereof, and was pressed at a temperature of 260°C, and a pressure of 2.5 MPa to prepare a thermoplastic composite material shaped plate (I) having a thickness of 2 mm and a plurality of protrusions at one surface thereof, in which the carbon fibers were 0°/ 90° alternately and symmetrically stacked and the carbon fiber volume fraction was 47% (carbon fiber content: 57% by mass).

In the thermoplastic composite material shaped plate (I), the protrusions had a cone shape, an average height of 0.5 mm, and a bottom portion with an average diameter of 1 mm, the average number of the protrusions per 1 $cm^2$ of the surface of the thermoplastic composite material was 16, and an average interval of adjacent protrusions was 3 mm. On the surface of thermoplastic composite material to be joined, a total area of the protrusions was 12% based on the surface of the thermoplastic composite material. The ratio of the thermoplastic resin in the protrusion was 70 wt%.

<Reference Example 2A> Manufacturing of Flat-Platy Carbon-Fiber Composite Material Shaped Plate (II-A) of Random Material

"TENAX" (registered trademark) STS40 (manufactured by TOHO TENAX Co.,Ltd., average fiber diameter: 7 μm) cut into an average fiber length of 20 mm, as carbon fibers, was formed into a sheet in a random orientation state such that the average fiber areal weight was 540 g/$m^2$. The sheets were interposed between 10 cloths of KE435-POG (nylon 6) (manufactured by UNITIKA LTD.) such that the carbon fiber sheet and the nylon 6 cloth were repeatedly stacked, and the stacked body was pressed at 260°C and 2.5 MPa by using a mold having recessed portions on the top thereof to prepare a thermoplastic composite material shaped plate (II-A) having a thickness of 2 mm and a plurality of protrusions at one surface thereof and having a carbon fiber volume fraction of 35% (carbon fiber content: 45% by mass).

The protrusions formed on the thermoplastic composite material shaped plate (II-A) had a quadrangular-pyramid shape, an average height of 1 mm, and a bottom portion with an average size (length of one side) of 1 mm, the average number of the protrusions per 1 $cm^2$ of the surface of the thermoplastic composite material shaped plate was 9, and an average interval of adjacent protrusions was 3 mm. On the surface of the thermoplastic composite material shaped plate to be joined, a total area of the protrusions was 9% based on the surface of the thermoplastic composite material. The ratio of the thermoplastic resin in the protrusion was 75 wt%.

<Reference Example 2B> Manufacturing of Flat-Platy Carbon-Fiber Composite Material Shaped Plate (II-B) Using Random Mat Material

"TENAX" carbon fibers (registered trademark) STS40-24KS (manufactured by TOHO TENAX Co.,Ltd., average fiber diameter: 7 μm) cut into an average fiber length of 20 mm, were used as carbon fibers, and nylon 6 resin A1030 manufactured by UNITIKA LTD. was used as a matrix resin to prepare a mat by a method disclosed in WO No. 2012/105080, in which the carbon fibers were randomly oriented with a fiber areal weight of 1800 g/$m^2$ for the carbon fibers and an areal weight of 1500 g/$m^2$ for the nylon resin. The mat was heated at 2.0 MPa for 5 min by a press device heated up to 260°C using a mold having recessed portions on the top thereof to obtain a thermoplastic composite material shaped plate (II-B) having a thickness of 2.3 mm and a plurality of protrusions at one surface thereof.

The protrusions formed on the thermoplastic composite material shaped plate (II-B) had a quadrangular pyramid trapezoidal shape, an average height of 0.7 mm, and a bottom portion with an average size (length of one side) of 1 mm, the average number of the protrusions per 1 $cm^2$ of the surface of the thermoplastic composite material shaped plate was 16, and an average interval of adjacent protrusions was 3 mm. On the surface of the thermoplastic composite material shaped plate to be joined, a total area of the protrusions was 16% based on the surface of the thermoplastic composite material. The ratio of the thermoplastic resin in the protrusion was 75 wt%.

Analysis was made on the carbon fibers included in the foregoing thermoplastic composite material shaped plate (II-B). As a result, the critical number of single fiber defined by the foregoing Equation (a) was 86, the average number (N) of fibers in carbon fiber bundles (A) constituted by the carbon fibers of the critical number of single fiber or more was 420, and the ratio of carbon fiber bundles (A) constituted by the carbon fibers of the critical number of single fiber or more was 85 Vol% based on the total amount of carbon fibers. The carbon fiber volume fraction of the obtained thermoplastic composite material was 43% (carbon fiber content: 54% by mass).

<Reference Example 3> Surface Treatment of Metal Member

Cold rolled steel (SPCC) with length 100 mm, width 25 mm, thickness 1.6 mm was degreased in aqueous sodium hydroxide in the concentration of 15.0 g/L and at the temperature of 60°C, for 60 sec, washed with water for 60 sec, and dried in an oven at 80°C for 30 min. The steel was immersed in phosphoric acid aqueous solution (the ratio of phosphoric acid was 90% or more based on components other than water) at the temperature of 60°C and in the concentration of 30 g/L to 50 g/L, for 300 sec, and washed with hot water at 60°C for 60 sec and water for 60 sec to form metal compound layers including phosphate metal salt and hydroxide as main components on both surfaces of the

metal plate. The metal plate having the metal compound layes was immersed in an ethanol/water (volume ratio 95/5) solution of triethoxysilylpropyl amino triazine thiol monosodium at a concentration of 0.7 g/L at a room temperature for 30 min, and then heat-treated in an oven at 160°C for 10 min. Then, the metal plate was immersed in an acetone solution containing N, N'-m-phenylene dimaleimide in the concentration of 1.0 g/L and dicumylperoxide in the concentration of 2 g/L at a room temperature for 10 min and heat-treated in an oven at 150°C for 10 min. An ethanol solution of dicumylperoxide in the concentration of 2 g/L was sprayed on the whole surface of the metal plate at a room temperature, and air-dried to form a triazine thiol derivative layer on the whole surface of the cold rolled steel (SPCC).

[Example 1]

The cold rolled steel (SPCC, length 100 mm, width 25 mm, thickness 1.6 mm) obtained from Reference Example 3 was heated up to 280°C, and the thermoplastic composite material shaped plate (I) having protrusions on one surface thereof, which was obtained from Reference Example 1, was cut out into a size of length 100 mm and width 25 mm, and dried at 80°C/5h. Then, the SPCC and the thermoplastic composite material shaped plate (I) overlap each other within a range of 25 mm×25 mm by single lap such that the protrusions on one surface of the thermoplastic composite material come in close contact with the SPCC surface, and then heat-treated by a press-molding machine at 0.2 MPa and 250°C for 1 min to prepare an joined body of the thermoplastic composite material and the SPCC. Five joined bodies prepared as described above were subjected to a tension test, and as a result, the average value of the joining strength was 12 MPa.

[Example 2]

Five thermoplastic composite material-SPCC joined bodies were prepared by the same operation as that in Example 1 except that the thermoplastic composite material shaped plate (II-A) having the protrusions on one surface thereof, which was obtained from Reference Example 2A, was used as a thermoplastic composite material shaped plate. The obtained joined bodies were subjected to a tension test, and as a result, the average value of the joining strength was 13 MPa.

[Example 3]

Five thermoplastic composite material-SPCC joined bodies were prepared by the same operation as that in Example 1 except that the thermoplastic composite material shaped plate (II-B) obtained from Reference Example 2B, which was prepard by the random mat material and had the protrusions on one surface thereof, was used as a thermoplastic composite material shaped plate. The obtained joined bodies were subjected to a tension test, and as a result, the average value of the bonding strength was 13 MPa.

[Example 4]

<Manufacturing of Thermoplastic Composite Material Shaped Plate (II-C) Using Random Mat Material>

A carbon-fiber composite material was prepared based on by the method disclosed in Japanese Patent Laid-Open Publication No. 2013-49208.

As carbon fibers, carbon fibers "TENAX" (registered trademark) STS40-24KS (average fiber diameter: 7 μm, strand width: 10 mm) manufactured by TOHO TENAX Co., Ltd were used. The fibers were slit into a width of 0.8 mm by using a vertical slitter, and cut into a fiber length of 20 mm by a rotary cutter. The strand that had passed through the cutter was introduced into a flexible transportation pipe disposed just below the rotary cutter, and then introduced into an opening device (gas spray nozzle) provided continuously to the lower end of the transportation pipe. As for the opening device, a double tube was manufactured by welding nipples made of SUS304 which have different diameters, in which small holes were provided in the inner tube of the double tube. Here, compressed air was sent by a compressor between the inner tube and the outer tube, and sprayed to the cut strands at wind velocity of 450 m/sec from the small holes such that the strands were partially opened by the air flow. A tapered tube having a diameter increasing downward was welded on the lower end of the doble tube, and within the tapered tube, the cut carbon fibers were moved downward along with the air flow. Here, a matrix resin was supplied into the tapered tube through holes formed at the lateral surface of the tapered tube. As the matrix resin, particles of a nylon resin (polyamide 6 resin) "A1030" manufactured by UNITIKA LTD. were used. A breathable net conveyor (hereinafter, sometimes referred to as "fixing net") moving in a given direction was provided below outlet of the tapered tube outlet while being sucked by a blower from the bottom side of the net. The flexible transportation pipe and the tapered tube were reciprocated in the width direction of the fixing net moving in a constant speed, and a mixture of the cut carbon fibers and the nylon resin particles discharged along with the air flow

from the front end of the tapered tube was deposited in a strip shape on the fixing net. Here, the supply amount of carbon fibers was set as 212 g/min, and the supply amount of the matrix resin was set as 320 g/min to drive the device. As a result, on the fixing net, a random mat in which the carbon fibers and the thermoplastic resin were evenly mixed was formed. The fiber areal weight of the reinforcing fibers in the random mat was 265 $g/m^2$.

In the obtained random mat, a critical number of single fiber defined by the foregoing Equation (a) was 86, the ratio of carbon fiber bundles (A) constituted by the carbon fibers of the critical number of single fiber or more to the total amount of carbon fibers of the mat was 35 Vol%, and the average number (N) of fibers in carbon fiber bundles (A) was 240. The nylon resin particles were uniformly dispersed in the carbon fibers almost free from unevenness.

Four random mats obtained from above were stacked, and passed through a couple of heating rollers at a temperature of 300°C, and a pressure of 1.0 MPa to prepare a thermoplastic composite material shaped plate with a thickness of 2.0 mm. As for one side roller, an embossing roller having a plurality of small groove-shaped protrusions on the surface thereof was used to obtain a thermoplastic composite material shaped plate (II-C) in which streaky protrusions were formed at equal intervals on one surface of the shaped plate. On the shaped plate, the streaky protrusions had a height of 0.2 mm, an interval of adjacent streaky protrusions was 5 mm, the ratio of a total area of the protrusions to the area of the surface, on which the protrusions are included, of the shaped plate was 15%. The carbon fibers included in the streaky protrusions were investigated, and as a result, fibers were hardly detected.

On the carbon-fiber composite material shaped plate (II-C), tensile moduli in 0°/90° directions were measured, and as a result, the ratio ($E\delta$) of moduli was 1.03. In the obtained shaped plate, fiber orientation hardly occurred, and isotropy was maintained. The shaped plate was heated within a furnace at 500°C for about 1 hour to remove the resin, and the ratio of carbon fiber bundles (A) and the average number (N) of fibers were investigated. These measurement results were not different from those in the random mat.

<Joining to Metal Plate>

The thermoplastic composite material shaped plate (II-C) having protrusions on the surface thereof, which was prepared by the random mat material, was cut out into a size of length 100 mm and width 25 mm, and dried at 80°C/5h. The SPCC obtained from Reference Example 3 and the thermoplastic composite material shaped plate (II-C) were superposed on each other within a range of 25 mm×25 mm by single lap such that the protrusions on one surface of the thermoplastic composite material comes in close contact with the SPCC surface, and then pressurized at 0.2 MPa. In that state, the SPCC was heated up to 280°C through induction heating by high frequency, and the protrusions on the surface of the thermoplastic composite material were molten by heat transfer from the SPCC to prepare a joined body of the thermoplastic composite material and the SPCC. Five joined bodies prepared as described above were subjected to a tension test, and as a result, the average value of the joining strength was 12 MPa.

Industrial Applicability

The joined body of a thermoplastic composite material and a metal member obtained by the method of the present invention is excellent in joining strength, and thus is useful in applications for components constituting mobile bodies such as cars, aircrafts, railroad vehicles, ships, and cycles, structure members of furniture or building materials, sports equipment, and various mechanical devices, and housings of electrical electronic devices.

The present invention has been described in detail with reference to specific exemplary embodiments, but it is apparent to those skilled in the art that various changes or modifications may be made without departing from the spirit and scope of the present invention.

This application is based on Japanese Patent Application No. 2012-152354, filed on July 6, 2012, and the contents of which are incorporated herein by reference.

## Claims

1. A method of manufacturing a joined body of a fiber-reinforced composite material and a metal member, the fiber-reinforced composite material including reinforcing fibers and a thermoplastic resin as a matrix,
the method comprising, in a state of bringing a protrusion including a thermoplastic resin on a surface of the fiber-reinforced composite material into contact with a surface of the metal member, melting the thermoplastic resin of the protrusion on the surface of the fiber-reinforced composite material to join the fiber-reinforced composite material to the metal member.

2. The method of manufacturing the joined body according to claim 1, wherein the protrusion on the surface of the fiber-reinforced composite material is brought into contact with the surface of the metal member on which a coating

layer of an organic compound having a polar functional group is formed.

**3.** The method of manufacturing the joined body according to claim 2, wherein the coating layer is formed by treating the surface of the metal member with a solution including the organic compound having the polar functional group.

**4.** The method of manufacturing the joined body according to any one of claims 1 to 3, wherein a height of the protrusion on the surface of the fiber-reinforced composite material ranges from 1% to 55% with respect to a thickness of the fiber-reinforced composite material.

**5.** The method of manufacturing the joined body according to any one of claims 1 to 4, wherein a height of the protrusion on the surface of the fiber-reinforced composite material ranges from 0.1 mm to 5 mm.

**6.** The method of manufacturing the joined body according to any one of claims 1 to 5, wherein a content of the thermoplastic resin in protrusion on the surface of the fiber-reinforced composite material ranges from 50 wt% to 100 wt%.

**7.** The method of manufacturing the joined body according to any one of claims 1 to 6, wherein ratio of a total area of a bottom portion of the protrusion to a surface area of a portion to be joined to the metal member ranges from 1% to 80%, on the surface of the fiber-reinforced composite material.

**8.** The method of manufacturing the joined body according to any one of claims 1 to 7, wherein the thermoplastic resin included in the protrusion on the surface of the fiber-reinforced composite material is the same kind of resin as the matrix of the fiber-reinforced composite material.

**9.** The method of manufacturing the joined body according to any one of claims 1 to 8, wherein wherein the fiber-reinforced composite material is a composite material obtained by impregnating a random mat including the reinforcing fibers with the thermoplastic resin as the matrix, and wherein in the fiber-reinforced composite material, an average fiber length of the reinforcing fibers ranges from 3 mm to 100 mm and an abundance of the matrix ranges from 30 parts to 200 parts by weight based on 100 parts by weight of the reinforcing fibers.

**10.** The method of manufacturing the joined body according to claim 9, wherein in the random mat, a ratio of reinforcing fiber bundles (A) constituted by the reinforcing fibers of a critical number of single fiber or more, defined by the following Equation (a), to a total amount of the reinforcing fibers in the random mat ranges from 20 Vol% to 99 Vol%, and an average number (N) of fibers in the reinforcing fiber bundles (A) satisfies the following Equation (b):

$$\text{Critical number of single fiber} = 600/D \qquad \text{(a)}$$

$$0.6\times10^4/D^2<N<1\times10^5/D^2 \qquad \text{(b)}$$

wherein D represents an average fiber diameter ($\mu$m) of single reinforcing fibers.

**11.** A fiber-reinforced composite material used for manufacturing a joined body of a fiber-reinforced composite material and a metal member, which comprises reinforcing fibers and a thermoplastic resin as a matrix, wherein the fiber-reinforced composite material has a joining portion to be joined to another member and a protrusion including a thermoplastic resin on a surface of the joining portion.

## INTERNATIONAL SEARCH REPORT

International application No. PCT/JP2013/068407

**A. CLASSIFICATION OF SUBJECT MATTER**

*B29C65/02*(2006.01)i, *B32B15/08*(2006.01)i, *C08J5/12*(2006.01)i

According to International Patent Classification (IPC) or to both national classification and IPC

**B. FIELDS SEARCHED**

Minimum documentation searched (classification system followed by classification symbols)
B29C65/02, B32B15/08, C08J5/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 62-44580 A (Toray Industries, Inc.), 26 February 1987 (26.02.1987), claims; examples (Family: none) | 11 |
| X | JP 62-56575 A (Toray Industries, Inc.), 12 March 1987 (12.03.1987), claims; examples (Family: none) | 11 |
| P,X<br>P,A | JP 2013-30724 A (Sumitomo Chemical Co., Ltd.), 07 February 2013 (07.02.2013), paragraphs [0009] to [0015], [0051] to [0055], [0061] to [0066] & WO 2012/176764 A1 & TW 201311436 A | 1-8,11<br>9-10 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 17 September, 2013 (17.09.13) | 24 September, 2013 (24.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/068407

C (Continuation). DOCUMENTS CONSIDERED TO BE RELEVANT

| Category* | Citation of document, with indication, where appropriate, of the relevant passages | Relevant to claim No. |
|---|---|---|
| Y | JP 6-115007 A (Sumitomo Chemical Co., Ltd.), 26 April 1994 (26.04.1994), claims; paragraphs [0008] to [0011]; examples & US 5736254 A & EP 620110 A1 & WO 1994/007689 A1 | 1-11 |
| Y | JP 52-117980 A (Matsushita Electric Works, Ltd.), 03 October 1977 (03.10.1977), page 1, right column, 4th line from the bottom to page 2, upper left column, line 17 (Family: none) | 1-11 |
| Y | JP 53-112482 A (Daiden Co., Ltd.), 30 September 1978 (30.09.1978), claims; page 1, line 10 to page 2, upper left column (Family: none) | 1-11 |
| Y | WO 2012/074083 A1 (Teijin Ltd.), 07 June 2012 (07.06.2012), claims & CA 2818928 A | 2-3 |
| Y | JP 2008-207547 A (Toray Industries, Inc.), 11 September 2008 (11.09.2008), claims; paragraphs [0122] to [0127] (Family: none) | 2-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003103563 A
- JP H551671 B
- WO 2009157445 A
- JP 2011235570 A
- WO 2012074083 A
- JP 2011070314 W
- WO 2012105080 A
- JP 2011188768 A
- JP 2013049208 A
- JP 2012152354 A